# EUROPÄISCHE PATENTSCHRIFT

(11) **EP 2 937 166 B1**
(45) Veröffentlichungstag und Bekanntmachung des Hinweises auf die Patenterteilung: **24.07.2019**
(21) Anmeldenummer: 15000837.3
(22) Anmeldetag: 21.03.2015
(51) Int. Cl.: B23D 57/02, B23D 59/00, B27B 17/02, B25F 5/02

(54) **HANDGEFÜHRTES ARBEITSGERÄT**
MANUALLY OPERATED WORK DEVICE
APPAREIL DE TRAVAIL PORTATIF

(30) Priorität: 27.03.2014 DE 102014004526
(43) Veröffentlichungstag der Anmeldung: 28.10.2015
(73) Patentinhaber: Andreas Stihl AG & Co. KG, 71336 Waiblingen (DE)
(72) Erfinder: Harer, Matthias, D-71334 Waiblingen (DE); Andresen, Erik, D-71336 Waiblingen (DE); Blechschmidt, Ralf, D-71394 Kernen (DE); Neumann, Philipp, D-70597 Stuttgart (DE); Hollmeier, Friedrich, D-73635 Rudersberg (DE)
(74) Vertreter: Reinhardt, Annette

(56) Entgegenhaltungen:
- DE-A1-102012 010 963
- DE-U1-202011 051 060
- US-A1- 2013 319 392

## Beschreibung

Die Erfindung betrifft ein handgeführtes Arbeitsgerät der im Oberbegriff des Anspruchs 1 angegebenen Gattung.

Aus der DE 10 2012 010 963 A1 ist ein handgeführtes Arbeitsgerät gemäß dem Oberbegriff des Anspruchs 1 bekannt, die einen Kettenraddeckel aufweist. An seinem unteren Längsrand ist der Kettenraddeckel vom Gehäuse beabstandet, so dass der Kettenradraum unterhalb des ersten Trums der Kette zur Umgebung offen ist.

Dadurch können Späne nach unten aus dem Kettenradraum herausfallen.

Aus der US 2013/0319392 A1 ist ein Gesteinschneider mit einem Kettenraddeckel bekannt. Der Kettenraddeckel besitzt eine Auslassöffnung für Schneidschlämme.

Aus der DE 20 2011 051 060 U1 ist eine Kettensäge mit einer Kettenabdeckung bekannt. Die Kettenabdeckung weist eine Auswurföffnung auf.

Der Erfindung liegt die Aufgabe zugrunde, ein handgeführtes Arbeitsgerät der gattungsgemäßen Art zu schaffen, das eine gute Spanabfuhr erlaubt.

Diese Aufgabe wird durch ein handgeführtes Arbeitsgerät mit den Merkmalen des Anspruchs 1 gelöst.

Es hat sich gezeigt, dass die Spanabfuhr aus dem Kettenradraum deutlich verbessert werden kann, wenn der Längsrand des Kettenraddeckels im Bereich der Auswurföffnung einen vergrößerten Abstand zur Mittelebene der Führungsschiene aufweist. Es ist vorgesehen, dass der Längsrand des Kettenraddeckels an der Auswurföffnung einen Abschnitt besitzt, in dem der Längsrand zur Mittelebene der Führungsschiene geneigt verläuft, wobei sich die Auswurföffnung an dem zur Mittelebene der Führungsschiene geneigt verlaufenden Abschnitt in Laufrichtung des ersten Trums der Säge verbreitert. Dadurch wird die Abfuhr der Späne begünstigt und die Verstopfungsneigung verringert. Der größte Abstand des Längsrands zur Mittelebene beträgt dabei mindestens 110% des kleinsten Abstandes.

Es hat sich gezeigt, dass auch sehr breite Auswurföffnungen zweckmäßig sind. Um die Baubreite des Arbeitsgeräts nicht übermäßig zu vergrößern, ist vorteilhaft vorgesehen, dass der größte Abstand höchstens 500% des kleinsten Abstandes beträgt. Der kleinste Abstand des Längsrands zur Mittelebene beträgt vorteilhaft höchstens das 1,5fache der Kettenbreite. Eine vorteilhafte Gestalt des Längsrands ergibt sich, wenn ein erster Bereich des Längsrands parallel zur Mittelebene der Führungsschiene verläuft und die Auswurföffnung von einem zweiten, zur Mittelebene mindestens teilweise geneigt verlaufenden Bereich des Längsrands begrenzt ist. Die in der Mittelebene gemessene Länge der Auswurföffnung beträgt vorteilhaft mindestens das 3fache, insbesondere mindestens das 5fache der Kettenbreite. Dadurch können Späne weitgehend ungehindert durch die Auswurföffnung in die Umgebung austreten. Besonders vorteilhaft verläuft der Längsrand an der Auswurföffnung in einem Bogen. Der Längsrand weist seinen größten Abstand zur Mittelebene dabei vorteilhaft in einem Abstand zu der Wand auf, die die Auswurföffnung an der dem Eintrittsbereich abgewandt liegenden Seite begrenzt. Der Abstand zu der die Auswurföffnung begrenzenden Wand beträgt dabei vorteilhaft mindestens die halbe Kettenbreite.

Um eine gute Spanabfuhr zu ermöglichen, ist vorteilhaft vorgesehen, dass die Auswurföffnung an der dem Eintrittsbereich abgewandt liegenden Seite von einer Wand eines Führungsteils begrenzt ist, wobei die Wand mit der Längsmittelachse der Führungsschiene einen zur Auswurföffnung öffnenden Winkel einschließt, der vorteilhaft mindestens 110° beträgt. Besonders vorteilhaft beträgt der Winkel mindestens 120°. Es hat sich gezeigt, dass eine besonders gute Spanabfuhr erreicht wird, wenn der Kettenraddeckel an der Auswurföffnung auch seitlich zur Laufrichtung der Kette öffnet. Hierzu ist vorteilhaft vorgesehen, dass die Innenwand des Kettenraddeckels an der Auswurföffnung in einer Schnittebene senkrecht zur Mittelebene und zur Längsmittelachse der Führungsschiene mit der Mittelebene einen Winkel einschließt, der von etwa 2° bis etwa 45° beträgt und der in Richtung vom Kettenradraum weg öffnet. Der Winkel beträgt besonders vorteilhaft etwa 2° bis etwa 10°. Der Längsrand schließt an der Auswurföffnung in Draufsicht auf die Ebene der Führungsschiene mit der Längsmittelachse der Führungsschiene vorteilhaft einen Winkel ein, der entgegen der Laufrichtung des ersten Trums öffnet und der vorteilhaft mindestens 3° beträgt. Der Winkel beträgt insbesondere mindestens 10°. Der Winkel ist dabei bevorzugt möglichst groß zu wählen.

Das Arbeitsgerät besitzt vorteilhaft mindestens ein an der Außenseite des Kettenraddeckels angeordnetes Befestigungselement zur Fixierung des Kettenraddeckels am Gehäuse des Arbeitsgeräts. Das Befestigungselement ist vorteilhaft in einer Vertiefung des Kettenraddeckels angeordnet, die von einer oberen Längsrippe und einer unteren Längsrippe begrenzt ist. Die Außenseiten der Längsrippen bilden dabei vorteilhaft eine Abstützfläche des Kettenraddeckels. Bei der Auflage des Arbeitsgeräts mit dem Kettenraddeckel beispielsweise auf einem Stamm oder dergleichen kann dadurch ein Hängenbleiben an den Befestigungselementen weitgehend vermieden werden. Dadurch kann das Arbeitsgerät im Betrieb gut geführt werden.

Um zu vermeiden, dass sich Späne im Bereich des zweiten Trums der Sägekette im Kettenraddeckel festsetzen, ist vorteilhaft vorgesehen, dass der Kettenraddeckel benachbart zum zweiten Trum der Sägekette eine obere Umfangswand besitzt, an die eine Kettenraddeckelfläche anschließt, wobei die Kettenraddeckelfläche zur Mittelebene einen Abstand von weniger als dem Doppelten der Kettenbreite besitzt. Es hat sich gezeigt, dass durch einen vergleichsweise geringen Abstand der Kettenraddeckelfläche zur Mittelebene das Einziehen von Spänen in den Bereich zwischen Kettenraddeckelfläche und der Sägekette weitgehend vermieden werden kann. Die Kettenraddeckelfläche ist dabei vorteilhaft etwa parallel zur Mittelebene ausgerichtet oder geringfügig zu dieser geneigt, während die obere Umfangswand quer, insbesondere etwa senkrecht zur Mittelebene verläuft. Der Kettenradraum ist am zweiten Trum der Sägekette vorteilhaft als Kanal ausgebildet, der sich zwischen der Sägekette und der oberen Umfangswand erstreckt und der in Richtung senkrecht zur Mittelebene mindestens teilweise von der Kettenraddeckelfläche begrenzt ist. Der Abstand der Außenseite der Kettenraddeckelfläche zur Mittelebene ist in einer Schnittebene, die die Drehachse des Antriebselements enthält und senkrecht zur Längsmittelachse der Führungsschiene steht, vorteilhaft kleiner als der Abstand der Außenseite der Abstützfläche zur Mittelebene. Die Kettenraddeckelfläche ist demnach gegenüber der Abstützfläche zum Gehäuse des Arbeitsgeräts hin versetzt. Dadurch kann das Arbeitsgerät sehr nah an einem Werkstück oder am Boden entlang geführt werden, wonach Schnitte sehr nah an einer Begrenzung möglich werden. Dadurch, dass die Kettenraddeckelfläche gegenüber der Abstützfläche zum Gehäuse des Arbeitsgeräts hin versetzt ist, ergibt sich eine vergleichsweise kompakte und schlanke Bauform des Arbeitsgeräts.

Der Abstand der Außenseite der Abstützfläche zur Mittelebene beträgt in einer Schnittebene, die die Längsachse eines Befestigungselements enthält und senkrecht zur Mittelebene steht, mindestens das 1,3fache des Abstandes der Außenseite der Kettenraddeckelfläche zur Mittelebene. Dadurch wird ein vergleichsweise großer Versatz zwischen Abstützfläche und Mittelebene erreicht. Vorzugsweise ist die Kettenraddeckelfläche im gesamten Bereich zwischen der dem freien Ende der Führungsschiene zugewandten Vorderseite und der Schnittebene, die die Drehachse des Antriebselements enthält und senkrecht zur Längsmittelachse der Führungsschiene steht, deutlich kleiner als der Abstand der Außenseite der Abstützfläche zur Mittelebene. Vorzugsweise beträgt der Abstand der Außenseite der Abstützfläche über den ganzen Bereich mindestens das 1,3fache des Abstandes der Außenseite der Kettenraddeckelfläche zur Mittelebene. Vorzugsweise geht die Abstützfläche an dem der Vorderseite des Kettenraddeckels abgewandten hinteren Bereich des Kettenraddeckels in die Kettenraddeckelfläche über, wobei der Übergang vorzugsweise gerundet erfolgt. Dadurch ist vermieden, dass der Bediener in diesem Bereich mit einer Kante zwischen Abstützfläche und Kettenraddeckelfläche an einem Werkstück hängen bleiben kann.

Vorzugsweise besitzt der Kettenraddeckel mindestens eine Befestigungsöffnung für einen Krallenanschlag, wobei die die Befestigungsöffnung umgebende Auflagefläche für den Krallenanschlag zur Mittelebene der Führungsschiene einen Abstand von höchstens der doppelten Kettenbreite aufweist. Der Abstand beträgt insbesondere weniger als das 1,8fache der Kettenbreite. Dadurch, dass die Auflagefläche für den Krallenanschlag gegenüber der Abstützfläche zum Gehäuse des Arbeitsgerätes hin versetzt ist, ergibt sich in diesem Bereich eine geringe Bauhöhe. Befestigungselemente für den Krallenanschlag können so ausgeführt werden, dass sie nicht über die Abstützfläche hinausstehen, so dass der Bediener beim Arbeiten durch die Befestigungselemente nicht gestört wird.

Vorzugsweise sind die Längsrippen in einem Bereich des Kettenraddeckels, der das Antriebselement abdeckt, miteinander über einen Verbindungsbereich verbunden. Dadurch wird im Bereich des Antriebselements ein ausreichend großer Abstand des Kettenraddeckels zum Antriebselement erreicht. Gleichzeitig ergibt sich eine verbesserte Auflage des Kettenraddeckels. Ein Einhaken an einem Werkstück an den einander zugewandten Längsseiten der Längsrippen wird weitgehend verhindert. Der Abstand der Außenseite des Verbindungsbereichs zur Mittelebene beträgt in einer Schnittebene, die die Drehachse des Antriebselements enthält und senkrecht zur Längsmittelachse der Führungsschiene steht, vorzugsweise mindestens das 1,3 fache des Abstands der Außenseite der Kettenraddeckelfläche zur Mittelebene in dieser Schnittebene. Vorzugsweise geht der Verbindungsbereich weitgehend eben in die Längsrippen über und besitzt höchstens einen geringen Versatz zur Außenseite der Längsrippen.

Vorteilhaft besitzt der Kettenraddeckel an der dem Längsrand zugewandten Längsseite der unteren Längsrippe eine Kante, die sich aus der Abstützfläche erhebt. An der Kante kann der Bediener das Arbeitsgerät am Werkstück abstützen. Ist das Arbeitsgerät eine Motorsäge, so kann die Kante die Motorsäge beim Entasten gegenüber dem Stamm abstützen. Dadurch ergibt sich ein einfaches, ergonomisches Arbeiten. Dadurch, dass die Kante an der Längsrippe und nicht an der Kettenraddeckelfläche angeordnet ist, steht die Kante über die Außenkontur des Kettenraddeckels hinaus. Dadurch wird ein Abrutschen des Arbeitsgeräts weitgehend vermieden. Die Kante besitzt vorteilhaft einen etwa keilförmigen Querschnitt. Dadurch ergeben sich ein einfacher Aufbau und eine gute Abstützwirkung. Eine gute Abstützung wird insbesondere erreicht, wenn die Außenseite der Kante mit der Abstützfläche einen Winkel von etwa 100° bis etwa 178° einschließt. Um eine gute Abstützwirkung zu erreichen, ist vorteilhaft vorgesehen, dass die senkrecht zur Abstützfläche gemessene Höhe der Kante etwa 1 mm bis etwa 5 mm beträgt. Die Höhe der Kante ist dabei bis zur Abstützfläche gemessen.

Um eine ausreichende Stabilität bei geringem Gewicht des Kettenraddeckels zu erreichen, ist vorgesehen, dass der Kettenraddeckel am Längsrand eine Verdickung mit etwa keilförmigem Querschnitt aufweist. Die Verdickung gewährleistet eine ausreichende Stabilität des Kettenraddeckels am Längsrand. Der Kettenraddeckel kann in der Fläche insgesamt mit geringerer Materialstärke ausgebildet werden, so dass sich ein geringes Gewicht des Kettenraddeckels ergibt.

Ein Ausführungsbeispiel der Erfindung wird im Folgenden anhand der Zeichnungen erläutert. Es zeigen:
- Fig. 1: eine schematische Seitenansicht einer Motorsäge,
- Fig. 2: einen schematischen Querschnitt einer Motorsäge,
- Fig. 3: eine Ansicht auf eine Sägekette in Längsrichtung,
- Fig. 4: eine Seitenansicht der Sägekette aus Fig. 3,
- Fig. 5 und 6: perspektivische Darstellungen des Bereichs von Gehäuse und Kettenraddeckel einer Motorsäge,
- Fig. 7: eine Seitenansicht auf den am Gehäuse angeordneten Kettenraddeckel,
- Fig. 8: eine Ansicht von vorn in Richtung des Pfeils VIII-VIII in Fig. 7,
- Fig. 9: die Darstellung aus Fig. 8 mit vom Kettenraddeckel abgenommenem Krallenanschlag,
- Fig. 10: einen Schnitt entlang der Linie X-X in Fig. 7,
- Fig. 11: einen Schnitt entlang der Linie XI-XI in Fig. 7,
- Fig. 12: einen Schnitt entlang der Linie XII-XII in Fig. 7,
- Fig. 13: einen Schnitt entlang der Linie XIII-XIII in Fig. 7,
- Fig. 14: einen Schnitt entlang der Linie XIV-XIV in Fig. 7,
- Fig. 15: einen Schnitt entlang der Linie XV-XV in Fig. 7,
- Fig. 16: eine Ansicht von unten in Richtung des Pfeils XVI in Fig. 7,
- Fig. 17: einen Schnitt entlang der Linie XVII-XVII in Fig. 7,
- Fig. 18: eine Seitenansicht des Kettenraddeckels von der dem Gehäuse der Motorsäge zugewandten Seite,
- Fig. 19: eine vergrößerte Darstellung des Bereichs einer Kante am Kettenraddeckel aus Fig. 15,
- Fig. 20: eine vergrößerte Darstellung eines Krallenanschlags der Motorsäge.

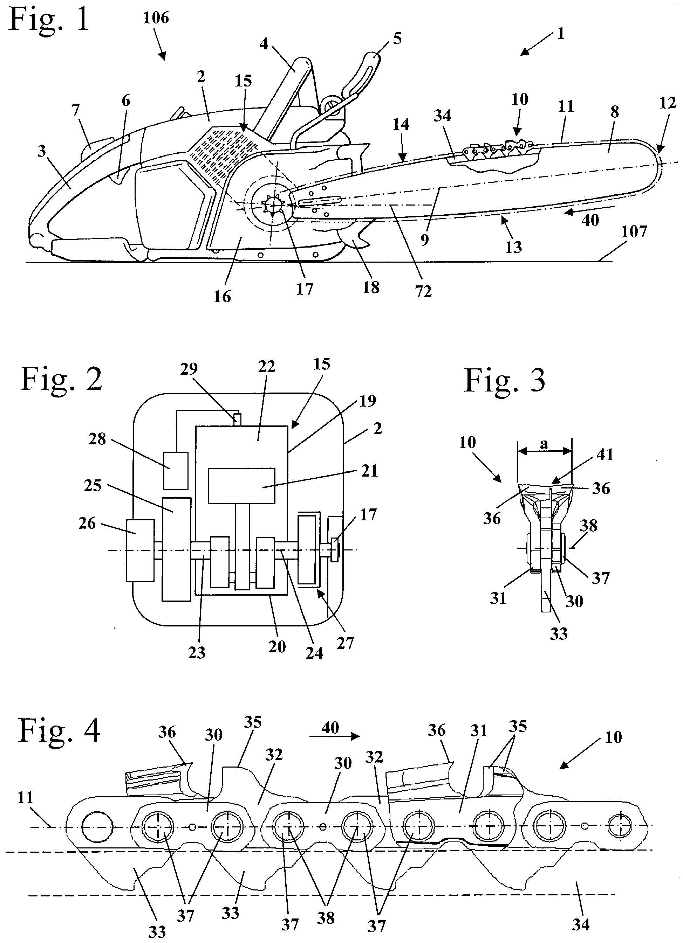

Fig. 1 zeigt als Ausführungsbeispiel für ein handgeführtes Arbeitsgerät schematisch eine Motorsäge 1. Die Motorsäge 1 besitzt ein Gehäuse 2, an dem ein hinterer Handgriff 3 und ein Griffrohr 4 zum Führen der Motorsäge 1 im Betrieb festgelegt sind. In Fig. 1 ist die Motorsäge 1 in einer Abstellposition 106 gezeigt, in der die Motorsäge 1 auf einer ebenen, horizontalen Abstellfläche 107 aufliegt. In Fig. 1 ist schematisch auch eine Horizontale 72 eingezeichnet, die in Abstellposition 106 horizontal ausgerichtet ist. Am Gehäuse 2 ist eine Führungsschiene 8 festgelegt, die eine Längsmittelachse 9 aufweist. Am Außenumfang der Führungsschiene 8 ist eine Sägekette 10 umlaufend angeordnet, die über ein Antriebselement 17 in einer Laufrichtung 40 angetrieben ist. Die Führungsschiene 8 besitzt einen dem Gehäuse 2 abgewandt liegenden Umlenkbereich 12. Die Sägekette 10 besitzt ein erstes Trum 13, das sich in Laufrichtung 40 vom Umlenkbereich 12 zum Antriebselement 17 bewegt und ein zweites Trum 14, das sich in Gegenrichtung vom Antriebselement 17 zum Umlenkbereich 12 bewegt. Die Sägekette 10 besitzt eine Längsmittelachse 11 und ist in einer Führungsnut 34 der Führungsschiene 8 geführt. Am Gehäuse 2 ist benachbart zur Führungsschiene 8 ein erster Krallenschlag 18 festgelegt.

Das Antriebselement 17 ist von einem Antriebsmotor 15 angetrieben, der im Ausführungsbeispiel als Verbrennungsmotor ausgebildet ist. Der Antriebsmotor 15 kann jedoch auch ein Elektromotor, vorzugsweise ein über Kabel oder über Akkus mit Energie versorgter Elektromotor sein. Der Bereich des Antriebselements 17 ist von einem am Gehäuse 2 festgelegten Kettenraddeckel 16 abgedeckt.

Zur Bedienung des Antriebsmotors 15 sind am hinteren Handgriff 3 ein Gashebel 6 sowie eine Gashebelsperre 7 schwenkbar gelagert. An der der Führungsschiene 8 zugewandten Seite der Griffrohrs 4 ist ein Handschutz 5 am Gehäuse 2 gehalten, der schwenkbar gelagert sein und zum Auslösen einer Kettenbremse dienen kann.

Fig. 2 zeigt den Aufbau des Antriebs der Motorsäge 1 schematisch im Einzelnen. Der Antriebsmotor 15 besitzt einen Zylinder 19 und ein Kurbelgehäuse 20. Im Zylinder 19 ist ein Kolben 21 hin- und hergehend gelagert. Der Kolben 21 begrenzt gemeinsam mit dem Zylinder 19 einen Brennraum 22, in den eine Zündkerze 29 ragt. Der Kolben 21 treibt über ein Pleuel eine Kurbelwelle 23 um eine Drehachse 24 rotierend an. Die Kurbelwelle 24 ist über eine Fliehkraftkupplung 27 mit dem Antriebselement 17 verbunden, das ebenfalls um die Drehachse 24 angetrieben ist. An der dem Antriebselement 17 abgewandten Seite des Verbrennungsmotors 15 ist ein Lüfterrad 25 an der Kurbelwelle 23 festgelegt. Das Lüfterrad 25 dient vorteilhaft als Schwungrad und erzeugt Energie in einem am Außenumfang des Lüfterrads 25 angeordneten Zündmodul 28. Das Zündmodul 28 versorgt die Zündkerze 29 mit Energie. Zum Starten des Antriebsmotors 15 dient eine an der dem Antriebsmotor 15 abgewandten Seite des Lüfterrads 25 an der Kurbelwelle 23 fixierte Anwerfvorrichtung 26.

Die Figuren 3 und 4 zeigen ein Ausführungsbeispiel für eine Sägekette 10 im Einzelnen. Die Sägekette 10 besitzt seitliche Verbindungsglieder 30, die mit mittigen Treibgliedern 32 gelenkig über Verbindungsbolzen 37 verbunden sind. Die seitlichen Verbindungsglieder 30 sind teilweise als Schneidglieder 31 ausgebildet. Die Schneidglieder 31 besitzen einen Hobelzahn 36, der dazu dient, von dem zu bearbeitenden Werkstoff, vorzugsweise Holz, einen Span abzuheben. Vorlaufend zu jedem Hobelzahn 36 sind Tiefenbegrenzer 35 am Treibglied 32 und am Schneidglied 31 angeordnet. Jedes Treibglied 32 besitzt einen Treibansatz 33, der in die in Fig. 4 schematisch gezeigte Führungsnut 34 eintaucht. Die Treibansätze 33 greifen in das Antriebselement 17 (Fig. 1) ein, wodurch die Sägekette 10 angetrieben wird. Die Verbindungsbolzen 37 besitzen jeweils eine Längsmittelachse 38. Die Längsmittelachse 11 verläuft mittig zwischen benachbarten Verbindungsgliedern 30 und schneidet die Längsmittelachsen 38 der Verbindungsbolzen 37.

Wie Fig. 3 zeigt, bilden die der Führungsschiene abgewandt liegenden Bereiche der Hobelzähne 36 ein Dach 41. Das Dach 41 ist Teil der Kontur, die beim Blick auf die Sägekette 10 in Richtung der Längsmittelachse 11 der Sägekette 10 sichtbar ist, und bildet die Außenkontur des Raums, den die Sägekette 10 bei einer Bewegung in Richtung ihrer Längsmittelachse 11 benötigt. Die Sägekette 10 besitzt eine parallel zur Längsmittelachse 38 eines Verbindungsbolzens 37 gemessene Kettenbreite a. Die Kettenbreite a ist die größte Erstreckung der Sägekette 10 senkrecht zur Ebene der Führungsschiene 8.

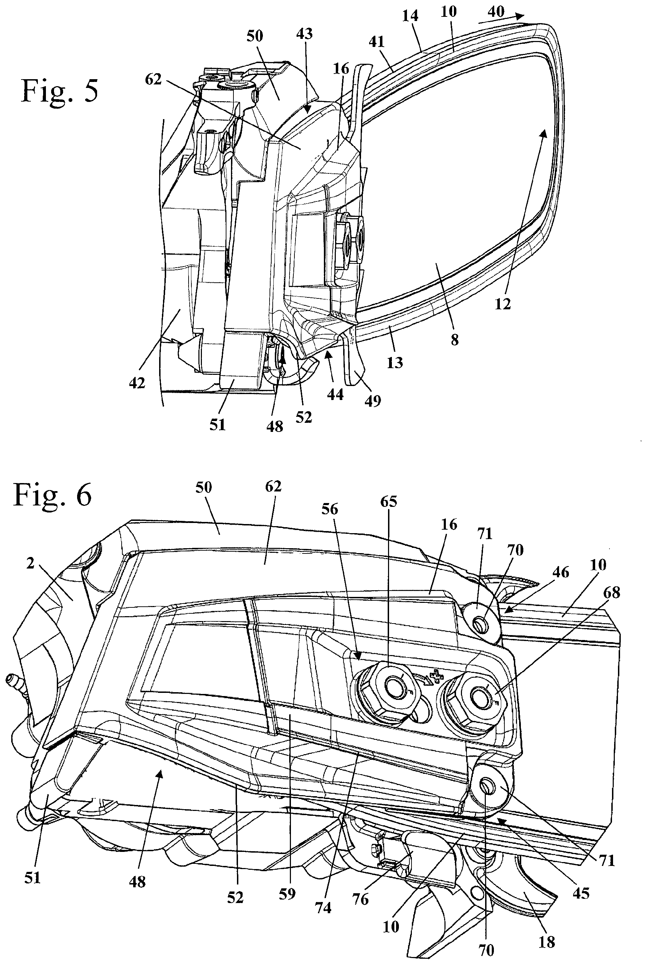

Wie Fig. 5 zeigt, besitzt der Kettenraddeckel 16 eine Oberseite 43 und eine Unterseite 44. In der in Fig. 1 gezeigten Abstellposition 106 weist die Oberseite 43 nach oben und die Unterseite 44 nach unten. An der Unterseite 44 besitzt der Kettenraddeckel 16 einen Längsrand 52. In Fig. 5 ist auch ein am Kettenraddeckel 16 gehaltener zweiter Krallenanschlag 49 sichtbar. Der Kettenraddeckel 16 ist an einem Gehäuseteil 42 des Gehäuses 2 festgelegt. Aus dem Kettenraddeckel 16 ragt an der dem Umlenkbereich 12 der Führungsschiene 8 abgewandten Seite benachbart zur Unterseite 44 ein Führungsteil 51 heraus. Das Führungsteil 51 begrenzt eine am Kettenraddeckel 16 gebildete Auswurföffnung 48. Das Führungsteil 51 besteht vorzugsweise aus einem elastischen Material wie Gummi oder dgl. Der Kettenraddeckel 16 besitzt eine Kettenraddeckelfläche 62. Benachbart zur Oberseite 43 des Kettenraddeckels 16 ist am Gehäuse 2 eine Rampe 50 angeordnet, die die Oberseite 43 des Kettenraddeckels 16 teilweise überdeckt und dadurch einen vergleichsweise sanften Übergang vom Gehäuseteil 42 zur Kettenraddeckelfläche 62 schafft.

Wie Fig. 6 zeigt, besitzt der Kettenraddeckel 16 eine Abstützfläche 59, die als Erhebung im Kettenraddeckel 16 ausgebildet ist. Gegenüber der Abstützfläche 59 ist die Kettenraddeckelfläche 62 zum Gehäuse 2 der Motorsäge 1 hin versetzt. Die Abstützfläche 59 begrenzt eine Vertiefung 56, in der Befestigungselemente, nämlich Befestigungsmuttern 65 und 68 zur Fixierung des Kettenraddeckels 16 am Gehäuse 2 angeordnet sind. Die Befestigungsmuttern 65 und 68 stehen dabei vorteilhaft nicht oder nur geringfügig über die Abstützfläche 59 hinaus. An dem dem Längsrand 52 zugewandten Bereich der Abstützfläche 59 ist eine Kante 74 am Kettenraddeckel 16 angeordnet. Im Betrieb liegt die Motorsäge 1 beispielsweise beim Entasten mit der Abstützfläche 59 auf einem Stamm auf und wird vom Bediener um den Stamm geschwenkt. Dadurch, dass die Kettenraddeckelfläche 62 gegenüber der Abstützfläche 59 zum Gehäuse 2 hin versetzt ist, bildet der Längsrand 52 keinen ausreichenden Halt zur Abstützung der Motorsäge 1. Dadurch, dass die Kante 74 aus der Abstützfläche 59 ragt, kann die Motorsäge 1 an der Kante 74 am Werkstück, beispielsweise am Stamm, einhaken und rutscht dadurch im Betrieb nicht ab.

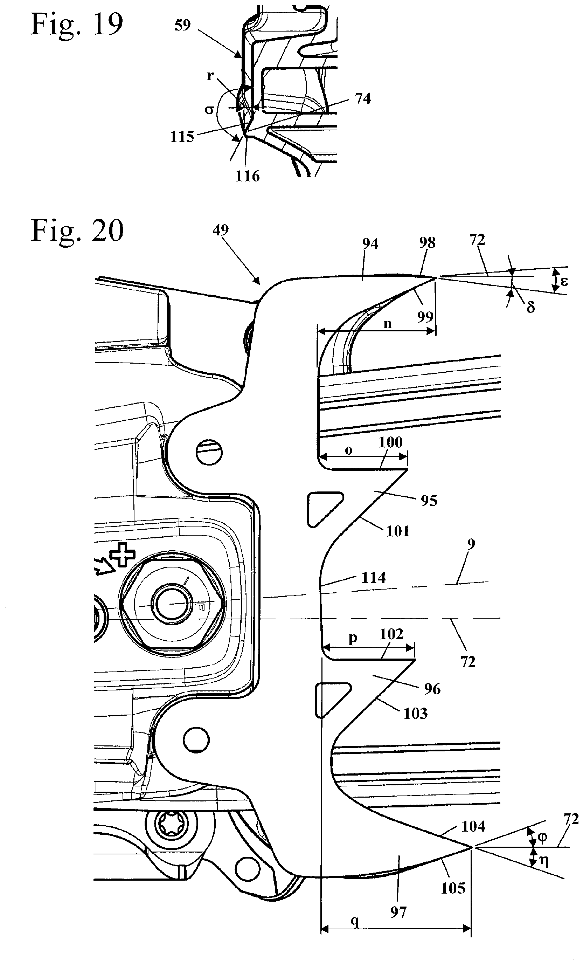

Die Gestaltung der Kante 74 ist in Fig. 19 im Einzelnen gezeigt. Die Kante 74 besitzt einen keilförmigen Querschnitt, wobei eine Unterseite 116 der Kante 74 etwa horizontal verläuft. Die Kante 74 besitzt eine Außenseite 115, die aus der Abstützfläche 59 nach unten und in Richtung vom Kettenradraum 47 weg verläuft. Die Außenseite 115 schließt mit der Abstützfläche 59 einen Winkel σ ein, der vorteilhaft zwischen 100° und 178° beträgt. Der Winkel σ beträgt insbesondere von etwa 130° bis etwa 175°, vorzugsweise von etwa 150° bis etwa 160°. Die Kante 74 besitzt eine Höhe r, die senkrecht zur Abstützfläche 59 bis zur Abstützfläche 59 gemessen ist. Die Höhe r beträgt vorteilhaft etwa 1 mm bis etwa 5 mm.

In Fig. 6 ist der Kettenraddeckel 16 ohne den zweiten Krallenanschlag 49 gezeigt. Wie Fig. 6 zeigt, besitzt der Kettenraddeckel 16 zwei Befestigungsöffnungen 70, die von Auflageflächen 71 für Befestigungselemente des zweiten Krallenanschlags 49 umgeben sind. Wie Fig. 6 zeigt, erheben sich die Auflageflächen 71 nur geringfügig, beispielsweise um 0,5 mm bis 2 mm, aus der Kettenraddeckelfläche 62. Dadurch können auch die Befestigungselemente für den Krallenanschlag 49 weitgehend eben mit der Abstützfläche 59 oder gegenüber der Abstützfläche 59 versenkt angeordnet werden.

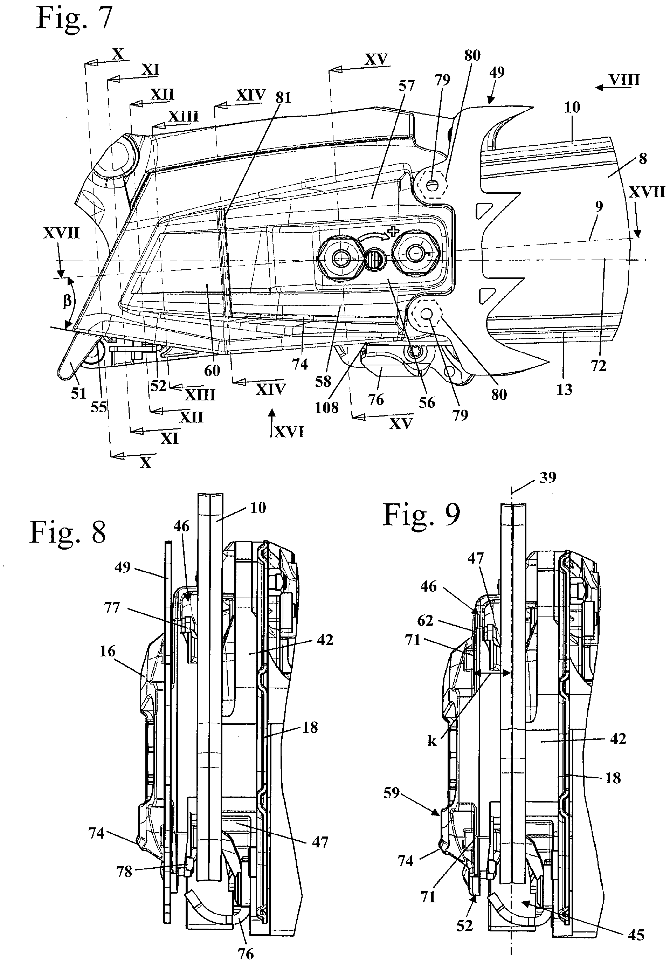

In den Figuren 5 und 6 ist die Sägekette 10 nur schematisch gezeigt, und zwar durch den Raumbereich, den die Sägekette 10 bei Umlauf in die Führungsschiene 8 einnimmt. Wie Fig. 6 zeigt, ist zwischen Kettenraddeckel 16 und dem Gehäuse 2 ein Eintrittsbereich 45 gebildet, an dem die Sägekette 10 in den Bereich des Kettenraddeckels 16 eintritt, sowie eine Austrittsöffnung 46, an der die Sägekette 10 aus dem vom Kettenraddeckel 16 begrenzten Kettenradraum 47 (Fig. 9) austritt. Der Eintrittsbereich 45 erstreckt sich dabei bis zu dem Bereich, in dem die Sägekette 10 in einer Ansicht senkrecht auf die Ebene der Führungsschiene 8 nicht mehr sichtbar ist. Das Ende 108 des Eintrittsbereichs 45 ist in Fig. 7, die eine Seitenansicht in der genannten Richtung zeigt, gezeigt.

Wie Fig. 6 zeigt, ist am Gehäuse 2 der Motorsäge 1 ein Kettenfänger 76 festgelegt, der den Bereich unterhalb der Sägekette 10 abdeckt und bis nahe zum Längsrand 52 des Kettenraddeckels 16 ragt. Der Kettenfänger 76 kann auch am Kettenraddeckel 16 angeordnet sein und zum Gehäuse 2 ragen.

Wie Fig. 7 zeigt, ist die Vertiefung 56 von einer oberen Längsrippe 57 und einer unteren Längsrippe 58 begrenzt. Die Längsrippen 57 und 58 sind an der der Führungsschiene 8 abgewandten Seite über einen Verbindungsbereich 60 miteinander verbunden. Die Längsrippen 57 und 58 bilden mit dem Verbindungsbereich 60 die Abstützfläche 59. Über die obere Längsrippe 57, den Verbindungsbereich 60 und die untere Längsrippe 58 erstreckt sich eine Fällleiste 81, die im Ausführungsbeispiel als Vertiefung ausgebildet ist. Die Fällleiste 81 kann jedoch auch als Erhöhung ausgebildet sein und zusätzlich oder alternativ farblich abgesetzt sein. Die Fällleiste 81 erlaubt ein einfaches Peilen der Fällrichtung eines Baums. Wie Fig. 7 zeigt, ist der Längsrand 52 in dem die Auswurföffnung 48 begrenzenden Bereich in Abstellposition 106 der Motorsäge 1 nach hinten und oben geneigt. Der Längsrand 52 schließt in Blickrichtung senkrecht zur Ebene der Führungsschiene 8, also in Draufsicht auf die Ebene der Führungsschiene 8, mit der Längsmittelachse 9 der Führungsschiene 8 einen Winkel β ein. Der Winkel β öffnet entgegen der Laufrichtung 40 des ersten Trums 13 der Sägekette 10, also in Richtung zum Umlenkbereich 12 der Führungsschiene 8 (Fig. 1). Der Winkel β beträgt vorteilhaft mindestens 3°. Vorzugsweise beträgt der Winkel β mindestens 10°. Um eine gute Spanabfuhr zu ermöglichen, wird der Winkel β vorzugsweise möglichst groß gewählt.

Fig. 7 zeigt auch schematisch Befestigungsschrauben 80, mit denen der zweite Krallenanschlag 49 am Kettenraddeckel 16 fixiert werden kann. Alternativ können am Kettenraddeckel 16 Schrauben festgelegt sein, auf die an der Außenseite des Kettenraddeckels 16 aufgelegte Muttern aufgeschraubt werden. Es kann auch vorgesehen sein, dass die Schrauben an der Außenseite des Kettenraddeckels 16 angeordnet sind und die Muttern an der Innenseite. Auch eine andere Fixierung des Krallenanschlags 49 kann vorteilhaft sein. Wie Fig. 7 zeigt, besitzt das Führungsteil 51 eine Wand 55, die die Auswurföffnung 48 an der bezogen auf die Laufrichtung 40 des ersten Trums 13 hinten liegenden Seite begrenzt.

Wie Fig. 8 zeigt, begrenzt der Kettenraddeckel 16 zusammen mit dem Gehäuseteil 42 den Kettenradraum 47, in dem die Sägekette 10 benachbart zum Gehäuse 2 läuft. Fig. 8 zeigt auch eine obere Gleitleiste 77 sowie eine untere Gleitleiste 78, die am Kettenraddeckel 16 gehalten sind. Die Gleitleisten 77 und 78 sind vorteilhaft aus Kunststoff ausgebildet und nahe am Eintrittsbereich 45 bzw. an der Austrittsöffnung 46 angeordnet, um die Sägekette 10 seitlich zu führen. Fig. 8 zeigt auch die beidseitig der Führungsschiene 8 angeordneten Krallenanschläge 18 und 49.

Fig. 9 zeigt die Anordnung aus Fig. 8 ohne den zweiten Krallenanschlag 49. Wie Fig. 9 zeigt, sind die Auflageflächen 71, an denen der Krallenanschlag 49 aufliegt, näherungsweise eben in der Kettenraddeckelfläche 62 angeordnet. Die Führungsschiene 8 besitzt eine Mittelebene 39, die senkrecht zur Drehachse 24 des Antriebselements 17 steht und die die Längsmittelachse 9 der Führungsschiene 8 enthält. Die Auflagefläche 71 besitzt zur Mittelebene 39 einen Abstand k, der höchstens der doppelten Kettenbreite a entspricht. Vorzugsweise beträgt der Abstand k weniger als das 1,8fache der Kettenbreite a.

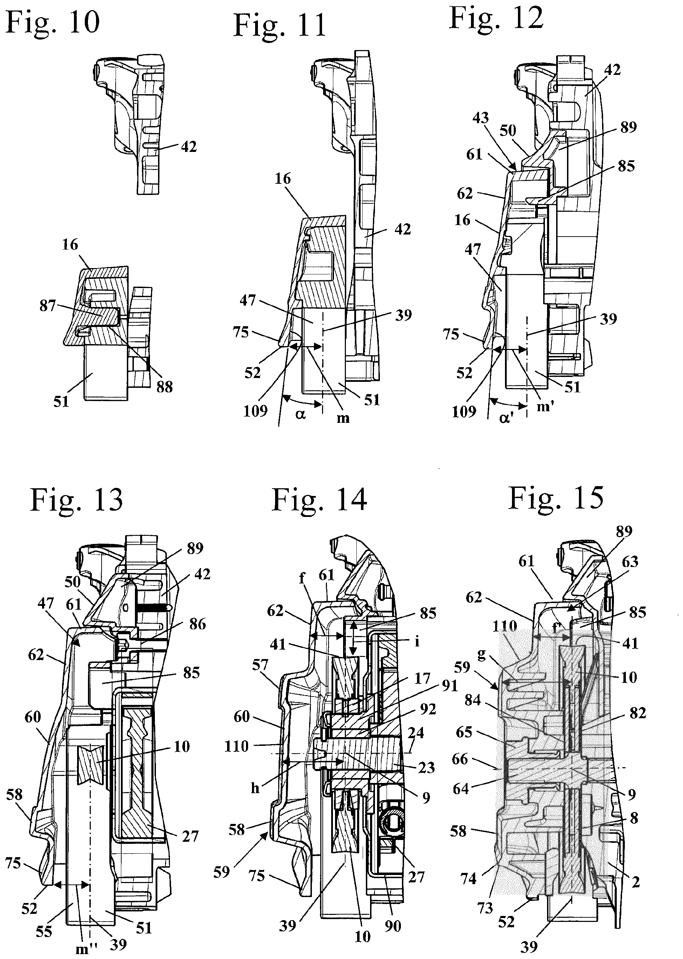

Die Figuren 10 bis 15 zeigen den Kettenraddeckel 16 am Gehäuse 2 in unterschiedlichen, senkrecht zur Längsmittelachse 9 verlaufenden Schnittebenen. Die Figuren 11, 12 und 13 zeigen dabei Schnitte durch die Auswurföffnung 48. Wie Fig. 10 zeigt, ist das Führungsteil 51 am Kettenraddeckel 16 über einen Zapfen 87 des Kettenraddeckels 16 gehalten, der in eine Ausnehmung 88 des Führungsteils 51 ragt.

Wie die Figuren 11 und 12 zeigen, ist die Innenwand 109 des Kettenraddeckels 16 benachbart zum Längsrand 52 gegenüber der Mittelebene 39 geneigt. In der in Fig. 11 gezeigten Schnittebene schließt die Innenwand 109 mit der Mittelebene 39 einen Winkel α ein, der von etwa 2° bis etwa 45° betragen kann. Vorzugsweise beträgt der Winkel α von etwa 2° bis etwa 10°. Im Ausführungsbeispiel ist in der gezeigten Schnittebene ein Winkel α von etwa 3° bis 5° vorgesehen. Wie Fig. 11 zeigt, weist der Kettenraddeckel 16 benachbart zum Längsrand 52 eine Verdickung 75 auf, die sich keilförmig nach unten vergrößert. Dadurch ist die Stabilität des Kettenraddeckels 16 am Längsrand 52 erhöht. Der Längsrand 52 besitzt einen senkrecht zur Mittelebene 39 gemessenen Abstand m zur Mittelebene 39.

In der in Fig. 12 gezeigten Schnittebene schließt die Innenwand 109 mit der Mittelebene 39 einen Winkel a' ein, der etwas kleiner als der Winkel α in der Schnittebene in Fig. 11 ist. Der Winkel a' liegt vorzugsweise in den gleichen Winkelbereichen, die für den Winkel a als vorteilhaft angegeben sind. Wie Fig. 12 zeigt, ist die Rampe 50 an einem Gehäusebauteil 89 ausgebildet, das am Gehäusebauteil 42 festgelegt ist. Die Rampe 50 kann jedoch auch einteilig mit dem Gehäuseteil 42 ausgebildet sein. Die Rampe 50 übergreift eine obere Umfangswand 61 des Kettenraddeckels 16 und verläuft an der Oberseite 43 des Kettenraddeckels 16. Die obere Umfangswand 61 begrenzt den Kettenradraum 47 in Abstellposition 106 (Fig. 1) nach oben. Wie Fig. 12 zeigt, ist die obere Umfangswand 61 zur Kettenraddeckelfläche 62 geneigt, wobei die obere Umfangswand 61 näherungsweise senkrecht zur Kettenraddeckelfläche 62 angeordnet sein kann. Die obere Umfangswand 61 begrenzt den Kettenradraum 47 in Abstellposition 106 (Fig. 1) nach oben. Wie Fig. 12 auch zeigt, ist am Gehäusebauteil 89 eine Leitrippe 85 angeformt, die in den Kettenradraum 47 ragt. Der Längsrand 52 besitzt in dieser Schnittebene einen Abstand m' zur Mittelebene 39, der größer als der Abstand m ist. Die in Fig. 11 gezeigte Schnittebene liegt dabei weiter entfernt vom Umlenkbereich 12 (Fig. 1) als die in Fig. 12 gezeigte Schnittebene.

Wie Fig. 13 zeigt, ist das Gehäusebauteil 89 im Ausführungsbeispiel mit einer Schraube 86 am Gehäusebauteil 42 fixiert. Am Führungsteil 51 ist die Wand 55 ausgebildet. Wie Fig. 13 auch zeigt, erheben sich in der gezeigten Schnittansicht der Verbindungsbereich 60 und die untere Längsrippe 58 aus der Kettenraddeckelfläche 62. Die obere Längsrippe 57 erstreckt sich nicht bis in diesen Bereich. Die Kettenraddeckelfläche 62 geht allmählich in den Verbindungsbereich 60 über. In der in Fig. 13 gezeigten Schnittansicht, die näher am Umlenkbereich 12 (Fig. 1) liegt als die in Fig. 12 gezeigte Schnittansicht, besitzt der Längsrand 52 zur Mittelebene 39 einen Abstand m", der kleiner als der Abstand m' (Fig. 12) ist.

Fig. 14 zeigt einen Schnitt senkrecht zur Längsmittelachse 9 der Führungsschiene 8 und durch die Drehachse 24 des Antriebselements 17. Wie Fig. 14 zeigt, ist das Antriebselement 17 als Antriebsrad ausgebildet, das längsverschieblich auf einem Zapfen 91 einer Kupplungstrommel 90 der Fliehkraftkupplung 27 gelagert ist. Das Antriebsteil 17 kann jedoch auch ein Antriebsritzel sein, das fest mit der Kupplungstrommel 90 verbunden ist. Wie Fig. 14 zeigt, besitzt der Verbindungsbereich 60 in der gezeigten Schnittansicht an der Drehachse 24 einen Abstand h zur Mittelebene 39. Die Kettenraddeckelfläche 62 besitzt zur Mittelebene 39 in dieser Schnittebene einen Abstand f. Der Abstand h beträgt vorteilhaft mindestens das 1,3fache des Abstands f. Die Abstände h und f sind jeweils zu einer Außenseite 110 des Kettenraddeckels 16 gemessen. Wie Fig. 14 auch zeigt, besitzt das Dach 41 einen Abstand i zur Leitrippe 85. Die Leitrippe 85 verläuft etwa parallel zum Dach 41 zwischen dem Dach 41 und der oberen Umfangswand 61. Der Abstand i ist vorteilhaft möglichst klein. Es hat sich gezeigt, dass dadurch die Gefahr des Einklemmens eines Spans deutlich verringert werden kann, da Späne, die in den Bereich zwischen Leitrippe 85 und Sägekette 10 gelangen, schnell von der Sägekette 10 zerspant werden. Fig. 14 zeigt auch ein Lager 92, mit dem der Zapfen 91 der Kupplungstrommel 90 auf der Kurbelwelle 23 gelagert ist.

Fig. 15 zeigt einen Schnitt durch einen Befestigungsbolzen 64 der Führungsschiene 8. Der Befestigungsbolzen 64 ist dabei der Befestigungsbolzen, der näher am Antriebselement 17 liegt. Es kann auch vorgesehen sein, den Kettenraddeckel 16 mit nur einem Befestigungsbolzen am Gehäuse 2 zu fixieren. Der Befestigungsbolzen 64 besitzt eine Längsachse 66, die senkrecht zur Mittelebene 39 ausgerichtet ist. Wie Fig. 15 zeigt, ist die Kante 74 an einer unteren Längsseite 73 der unteren Längsrippe 58 angeordnet. Die untere Längsseite 73 ist dabei die Längsseite der unteren Längsrippe 58, die dem Längsrand 52 zugewandt liegt. Wie Fig. 15 zeigt, besitzt der Kettenraddeckel 16 eine Auflagefläche 84, mit der der Kettenraddeckel 16 auf der Führungsschiene 8 aufliegt. Am Gehäuse 2 ist eine Schienenanschlagfläche 82 gebildet, an der die Führungsschiene 8 aufliegt. Zwischen Führungsschiene 8 und Gehäuse 2 kann auch ein Seitenblech angeordnet sein.

Wie Fig. 15 zeigt, besitzt die Außenseite 110 der Kettenraddeckelfläche 62 in der in Fig. 15 gezeigten Schnittebene zur Mittelebene 39 einen Abstand f. Der Abstand f kann näherungsweise dem in Fig. 14 gezeigten Abstand f entsprechen. Die Außenseite 110 der Abstützfläche 59 besitzt zur Mittelebene 39 einen Abstand g, der vorteilhaft deutlich größer als der Abstand f ist. Der Abstand g beträgt vorteilhaft mindestens das 1,3fache des Abstands f, f. Um die Baubreite der Motorsäge 1 nicht unnötig zu vergrößern, beträgt der Abstand g vorteilhaft weniger als das Doppelte des Abstands f, f. Wie Fig. 15 auch zeigt, bildet der Kettenraum 47 benachbart zum Dach 41 der Sägekette 10 einen Kanal 63, der durch die Umfangswand 61 und die Kettenraddeckelfläche 62 begrenzt ist. In dem Kanal 63 ist der Abstand der Kettenraddeckelfläche 62 zur Sägekette 10 vorteilhaft vergleichsweise gering. Auch der Abstand zur Umfangswand 61 und zur Leitrippe 85 ist vorteilhaft möglichst gering.

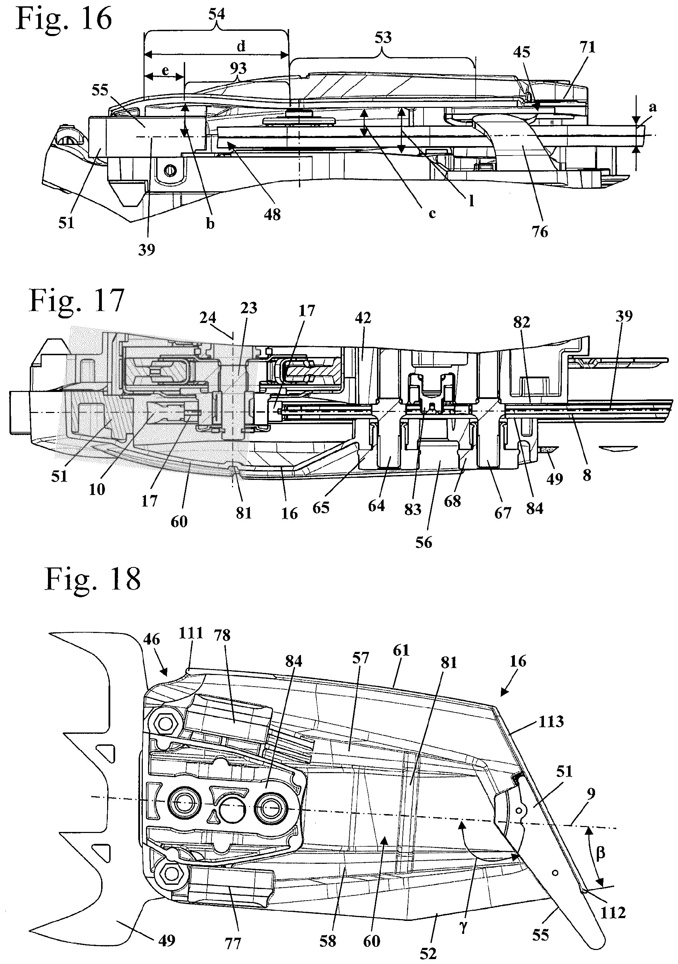

Fig. 16 zeigt den Längsrand 52 im Einzelnen. Der Längsrand 52 besitzt über mindestens 50%, insbesondere über mindestens 70% seiner Länge vom Eintrittsbereich 45 bis zur Auswurföffnung 48 einen senkrecht zur Mittelebene 39 gemessenen Abstand 1 zum Gehäuse 2. Der Abstand 1 kann dabei über die Länge des Längsrands 52 variieren. Der Abstand 1 entspricht jedoch an jeder Stelle zwischen dem Eintrittsbereich 45 und der Auswurföffnung 48 mindestens der Kettenbreite a. Wie Fig. 16 zeigt, wird der Abstand zwischen dem Längsrand 52 und dem Gehäuse 2 am Eintrittsbereich 45 teilweise vom Kettenfänger 76 überbrückt. Der Kettenfänger 76 kann auch am Kettenraddeckel 16 angeordnet und zwischen dem Eintrittsbereich 45 und der Austrittsöffnung 48 angeordnet sein. Der Abstand 1 zwischen Kettenraddeckel 16 und Gehäuse 2 entspricht über mindestens 50% der Länge des Längsrandes 52 vom Eintrittsbereich 45 bis zur Austrittsöffnung 48 mindestens der Kettenbreite a. Dieser Abstand kann stellenweise von Elementen wie dem Kettenfänger 76 oder Gleitleisten 77, 78 überbrückt sein.

Wie Fig. 16 zeigt, besitzt der Längsrand 52 einen ersten Bereich 53, der sich vom Eintrittsbereich 45 bis zur Auswurföffnung 48 erstreckt. Im Ausführungsbeispiel verläuft der Längsrand 52 in diesem ersten Bereich 53 parallel zur Mittelebene 39. Der Längsrand besitzt einen zweiten Bereich 54, der die Auswurföffnung 48 begrenzt und sich zwischen dem ersten Bereich 53 und der Wand 55 des Führungsteils 51 erstreckt. Der zweite Bereich 54 besitzt eine parallel zur Mittelebene 39 gemessene Länge d, die mindestens das 3fache, insbesondere mindestens das 5fache der Kettenbreite a beträgt. Im zweiten Bereich 54 verläuft der Längsrand 52 gebogen zur Mittelebene 39 der Führungsschiene 8. Die Auswurföffnung 48 ist der Bereich, der senkrecht zur Mittelebene 39 von dem gebogenen Abschnitt des Längsrands 52 begrenzt ist. In einem Abschnitt 93 entfernt sich der Längsrand 52 bogenförmig von der Mittelebene 39. Dabei verläuft der Längsrand 52 um einen sich ändernden Winkel geneigt zur Mittelebene 39. Zwischen dem Bereich 93 und der Wand 55 verläuft der Längsrand 52 bogenförmig in Richtung zur Mittelebene 39. Der Längsrand 52 besitzt seinen größten Abstand b zur Mittelebene 39 angrenzend an den Bereich 93 in einem Abstand e zur Wand 55. Der Abstand e entspricht mindestens der halben Kettenbreite a. Im Ausführungsbeispiel ist der Abstand e größer als die Kettenbreite a. Im ersten Bereich 53 besitzt der Längsrand 52 einen Abstand c zur Mittelebene 39. Vorteilhaft entspricht der Abstand c mindestens der Kettenbreite a. Der Abstand c ist dabei der kleinste Abstand, den der Längsrand 52 zur Mittelebene 39 aufweist. Der größte Abstand b beträgt vorteilhaft höchstens 500% des kleinsten Abstands c. Der kleinste Abstand c beträgt vorteilhaft höchstens das 1,5fache der Kettenbreite a.

Fig. 17 zeigt einen Schnitt durch die Längsmittelachse 9 und die Drehachse 24 senkrecht zur Mittelebene 39. Wie Fig. 17 zeigt, ist an der der Führungsschiene 8 zugewandten Seite des Kettenraddeckels 16 ein vorderer Befestigungsbolzen 67 am Gehäuseteil 42 festgelegt, auf den die Befestigungsmutter 68 aufgeschraubt ist. Die Befestigungsmuttern 65 und 68 sind in der Vertiefung 56 angeordnet. Nur die Befestigungsmutter 68 ragt geringfügig über die Außenseite des Kettenraddeckels 16 hinaus. Die Führungsschiene 8 ist zwischen der Schienenanschlagsfläche 82 und der Auflagefläche 84 am Kettenraddeckel 16 geklemmt gehalten. Zwischen den Befestigungsbolzen 64 und 67 ist am Gehäuseteil 42 eine Stellschraube 83 vorgesehen, mit der die Ölmenge, die der Sägekette 10 zugeführt wird, einstellbar ist. Wie Fig. 17 zeigt, ist die Fällleiste 81 so angeordnet, dass sie von der Drehachse 24 des Antriebselements 17 geschnitten wird. Der Verbindungsbereich 60 übergreift die Stirnseite der Kurbelwelle 23 mit vergleichsweise großem Abstand.

Fig. 18 zeigt die Gleitleisten 77 und 78 am Kettenraddeckel. Wie Fig. 18 auch zeigt, besitzt die obere Umfangswand 61 an ihrer die Austrittsöffnung 46 begrenzenden Stirnseite eine Verdickung 111. Der Kettenraddeckel 16 besitzt eine Rückwand 113, die dem zweiten Krallenanschlag 49 abgewandt liegt. Die Rückwand 113 besitzt benachbart zum Längsrand 52 eine Verdickung 112. Die Verdickungen 111 und 112 dienen zur Erhöhung der Stabilität des Kettenraddeckels 16. Das Führungsteil 51 besitzt eine Aussparung, in die die Verdickung 112 eingreift. Wie Fig. 18 auch zeigt, schließt die Wand 55 des Führungsteils 51 mit der Längsmittelachse 9 der Führungsschiene 8 einen Winkel γ ein, der vorteilhaft mindestens 110°, insbesondere mindestens 120° beträgt. Im Ausführungsbeispiel beträgt der Winkel γ etwa 130°. Auch der Winkel β zwischen dem unteren Längsrand 52 benachbart zur Auswurföffnung 48 (Fig. 16) und der Längsmittelachse 9 ist in Fig. 18 gezeigt.

Fig. 20 zeigt den Krallenanschlag 49 im Einzelnen. Der Krallenanschlag 49 besitzt eine erste Zinke 94, die in Abstellposition 106 (Fig. 1) oben angeordnet ist, eine zweite, darunter angeordnete Zinke 95, eine dritte, unter der zweiten Zinke 95 angeordnete Zinke 96 sowie eine vierte, unter der dritten Zinke 96 angeordnete Zinke 97. Die zweite Zinke 95 und die dritte Zinke 96 sind dabei deutlich kürzer ausgebildet als die erste Zinke 94 und die vierte Zinke 97. Zwischen der zweiten Zinke 95 und der dritten Zinke 96 besitzt der Krallenanschlag 49 einen Zinkengrund 114, der im Ausführungsbeispiel senkrecht zur Horizontalen 72 verläuft. Die erste Zinke 94 besitzt eine parallel zur Horizontalen 72 und bis zum Zinkengrund 114 gemessene Länge n. Die vierte Zinke 97 besitzt eine parallel zur Horizontalen 72 und bis zum Zinkengrund 114 gemessene Länge q, die im Ausführungsbeispiel größer als die Länge n der ersten Zinke 94 ist. Vorteilhaft beträgt die Länge q etwa 75% bis etwa 130% der Länge n. Die zweite Zinke 95 besitzt eine parallel zur Horizontalen 72 und bis zum Zinkengrund 114 gemessene Länge o, die deutlich kleiner als die Länge n und die Länge q ist. Die Länge o beträgt vorteilhaft weniger als 90% der Länge n. Die dritte Zinke 96 besitzt eine parallel zur Horizontalen 72 und bis zum Zinkengrund 114 gemessene Länge p, die vorteilhaft deutlich kleiner als die Länge n und die Länge q ist und der Länge o entspricht. Dadurch, dass die beiden mittleren Zinken 95 und 96 kürzer als die äußeren Zinken 94 und 97 ausgebildet sind, ergibt sich eine gute Ergonomie. Die äußeren Zinken 94 und 97 können beim seitlichen Schwenken des Krallenanschlags 49 deutlich länger in Eingriff mit einem Werkstück bleiben als die beiden mittleren Zinken 95 und 96.

Die zweite Zinke 95 und die dritte Zinke 96 sind vorteilhaft identisch oder nahezu identisch ausgebildet und besitzen eine Oberseite 100, 102 sowie eine Unterseite 101, 103. Die Oberseiten 100 und 102 verlaufen in Abstellposition 106 (Fig. 1) parallel zur Horizontalen 72. Die Oberseiten 100 und 102 können in Abstellposition 106 auch nach oben geneigt verlaufen. Der Winkel, den die Oberseiten 100 und 102 mit der Horizontalen 72 einschließen, beträgt dabei vorteilhaft bis maximal etwa 20°. Der Winkel kann dabei für beide Zinken 95 und 96 gleich sein. Auch geringfügig unterschiedliche Winkel können jedoch vorteilhaft sein. Die Unterseiten 101 und 103 sind zu den Oberseiten 100 und 102 um einen spitzen Winkel geneigt. Im Ausführungsbeispiel beträgt der Winkel, den die Oberseiten 100, 102 mit den Unterseiten 101, 103 einschließen, zwischen 30° und 60°, vorzugsweise etwa 45°. Der Winkel, den die Unterseiten 101, 103 mit der Horizontalen 72 einschließen, kann dabei für die zweite Zinke 95 und die dritte Zinke 96 gleich sein. Es können jedoch auch geringfügig unterschiedliche Winkel vorteilhaft sein. Die erste Zinke 94 besitzt eine Oberseite 98 und eine Unterseite 99. Die Oberseite ist dabei jeweils die in Abstellposition 106 nach oben weisende Seite und die Unterseite die in Abstellposition 106 nach unten weisende Seite. Die Oberseite 98 fällt benachbart zur Spitze der ersten Zinke 94 in Abstellposition 106 zum freien Ende der ersten Zinke 94 hin ab. Die erste Zinke 98 schließt benachbart zu ihrer Spitze mit der Horizontalen 72 einen Winkel δ ein, der vorzugsweise mehr als 2° beträgt. Vorzugsweise beträgt der Winkel δ von etwa 2° bis etwa 10°, insbesondere etwa 4° bis 6°. Die Oberseite 98 schließt mit der Unterseite 99, die zur Spitze der ersten Zinke 94 nach oben verläuft, einen Winkel ε ein, der vorzugsweise von etwa 5° bis etwa 40° beträgt.

Die Oberseite 104 der Zinke 97 fällt zum freien Ende der vierten Zinke 97 hin ab und schließt mit der Horizontalen 72 einen Winkel η ein, der von etwa 10° bis etwa 40° beträgt. Die Unterseite 105 der vierten Zinke 97 steigt zur Spitze hin an und schließt mit der Horizontalen 72 einen Winkel ϕ ein. Der Winkel ϕ kann näherungsweise gleich groß wie der Winkel η sein. Der Winkel ϕ beträgt vorzugsweise von etwa 10° bis etwa 40°. Die Oberseite 104 der vierten Zinke 97 schließt mit der Unterseite 105 einen Winkel ein, der deutlich größer als der Winkel ε ist. Dadurch, dass die Oberseite 98 der ersten Zinke 94 in Abstellposition 106 zur Spitze der Zinke 94 hin abfällt und die Unterseite 105 der vierten Zinke 97 in Abstellposition 106 zur Spitze der Zinke 97 hin ansteigt, wird ein einfaches Arbeiten ermöglicht.

## Patentansprüche

1. Handgeführtes Arbeitsgerät mit einem Gehäuse (2), an dem eine Führungsschiene (8) festgelegt ist, die eine Längsmittelachse (9) besitzt, mit einem Antriebsmotor (15), der über ein Antriebselement (17) eine an der Führungsschiene (8) umlaufend angeordnete Sägekette (10) in einer Laufrichtung (40) antreibt, wobei die Führungsschiene (8) eine gedachte Mittelebene (39) besitzt, die senkrecht zur Drehachse (24) des Antriebselements (17) verläuft und die Längsmittelachse (9) der Führungsschiene (8) enthält, wobei die Sägekette (10) eine senkrecht zur Mittelebene (39) gemessene Kettenbreite (a) besitzt, wobei die Führungsschiene (8) an ihrem vom Gehäuse (2) entfernt liegenden freien Ende einen Umlenkbereich (12) besitzt, wobei die Sägekette (10) ein erstes Trum (13) besitzt, das in Laufrichtung (40) von dem Umlenkbereich (12) zum Antriebselement (17) verläuft und ein zweites Trum (14), das in Laufrichtung (40) von dem Antriebselement (17) zu dem Umlenkbereich (12) verläuft, wobei das Antriebselement (17) in einem von einem Kettenraddeckel (16) begrenzten Kettenradraum (47) angeordnet ist, wobei die Sägekette (10) an einem Eintrittsbereich (45) in den Kettenradraum (47) eintritt, wobei der Kettenradraum (47) eine Auswurföffnung (48) für Schnittgut besitzt, wobei der Kettenraddeckel (16) einen Längsrand (52) besitzt, der den Kettenradraum (47) benachbart zum ersten Trum (13) der Sägekette (10) begrenzt, wobei der Längsrand (52) über mindestens 50% seiner Länge vom Eintrittsbereich (45) bis zur Auswurföffnung (48) einen senkrecht zur Mittelebene (39) gemessenen Abstand (1) zum Gehäuse (2) besitzt, wobei der Abstand mindestens der Kettenbreite (a) entspricht,
**dadurch gekennzeichnet, dass** der Längsrand (52) des Kettenraddeckels (16) an der Auswurföffnung (48) einen Abschnitt (93) besitzt, in dem der Längsrand (52) zur Mittelebene (39) der Führungsschiene (8) geneigt verläuft, und an dem sich die Auswurföffnung (48) in Laufrichtung (40) des ersten Trums (13) der Sägekette (10) verbreitert, wobei der größte Abstand (b) des Längsrands (52) zur Mittelebene (39) mindestens 110% des kleinsten Abstands (c) beträgt.

2. Arbeitsgerät nach Anspruch 1,
**dadurch gekennzeichnet, dass** der größte Abstand (b) höchstens 500% des kleinsten Abstands (c) beträgt.

3. Arbeitsgerät nach Anspruch 1 oder 2,
**dadurch gekennzeichnet, dass** der kleinste Abstand (c) des Längsrands (52) zur Mittelebene (39) höchstens das 1,5fache der Kettenbreite (a) beträgt.

4. Arbeitsgerät nach einem der Ansprüche 1 bis 3,
**dadurch gekennzeichnet, dass** ein erster Bereich (53) des Längsrands (52) parallel zur Mittelebene (39) verläuft und dass die Auswurföffnung (48) von einem zweiten, zur Mittelebene (39) mindestens teilweise geneigt verlaufenden Bereich (54) des Längsrands (52) begrenzt ist.

5. Arbeitsgerät nach einem der Ansprüche 1 bis 4,
**dadurch gekennzeichnet, dass** die in der Mittelebene (39) gemessene Länge (d) der Auswurföffnung (48) mindestens das 3fache der Kettenbreite (a) beträgt.

6. Arbeitsgerät nach einem der Ansprüche 1 bis 5,
**dadurch gekennzeichnet, dass** der Längsrand (52) an der Auswurföffnung (48) in einem Bogen verläuft, wobei der Längsrand (52) seinen größten Abstand (b) zur Mittelebene (39) in einem Abstand (e) zu der die Auswurföffnung (48) an der dem Eintrittsbereich (45) abgewandt liegenden Seite begrenzenden Wand (55) aufweist, der mindestens der halben Kettenbreite (a) entspricht.

7. Arbeitsgerät nach einem der Ansprüche 1 bis 6,
**dadurch gekennzeichnet, dass** die Auswurföffnung (48) an der dem Eintrittsbereich (45) abgewandt liegenden Seite von einer Wand (55) eines Führungsteils (51) begrenzt ist, die mit der Längsmittelachse (9) der Führungsschiene (8) einen zur Auswurföffnung (48) öffnenden Winkel (γ) einschließt, der mindestens 110° beträgt.

8. Arbeitsgerät nach einem der Ansprüche 1 bis 7,
**dadurch gekennzeichnet, dass** die Innenwand des Kettenraddeckels (16) an der Auswurföffnung (48) in einer Schnittebene senkrecht zur Mittelebene (39) und zur Längsmittelachse (9) der Führungsscheine (8) mit der Mittelebene (39) einen Winkel (α) einschließt, der von etwa 2° bis etwa 45°, beträgt und der in Richtung vom Kettenradraum (47) weg öffnet.

9. Arbeitsgerät nach einem der Ansprüche 1 bis 8,
**dadurch gekennzeichnet, dass** der Längsrand (52) an der Auswurföffnung (48) in Draufsicht auf die Ebene der Führungsschiene (8) mit der Längsmittelachse (9) der Führungsschiene (8) einen Winkel (β) einschließt, der entgegen der Laufrichtung (40) des ersten Trums (13) öffnet.

10. Arbeitsgerät nach einem der Ansprüche 1 bis 9,
**dadurch gekennzeichnet, dass** das Arbeitsgerät mindestens ein an der Außenseite des Kettenraddeckels (16) angeordnetes Befestigungselement zur Fixierung des Kettenraddeckels (16) am Gehäuse (2) des Arbeitsgeräts aufweist, wobei das Befestigungselement in einer Vertiefung (56) des Kettenraddeckels (16) angeordnet ist, die von einer oberen Längsrippe (57) und einer unteren Längsrippe (58) begrenzt ist, wobei die Außenseiten der Längsrippen (57, 58) eine Abstützfläche (59) des Kettenraddeckels (16) bilden.

11. Arbeitsgerät nach Anspruch 10,
**dadurch gekennzeichnet, dass** der Kettenraddeckel (16) benachbart zum zweiten Trum (14) der Sägekette (10) eine obere Umfangswand (61) besitzt, an die eine Kettenraddeckelfläche (62) anschließt, wobei die Kettenraddeckelfläche (62) zur Mittelebene (39) einen Abstand (f, f) von weniger als dem Doppelten der Kettenbreite (a) besitzt.

12. Arbeitsgerät nach Anspruch 11,
**dadurch gekennzeichnet, dass** der Kettenradraum (47) am zweiten Trum (14) der Sägekette (10) als Kanal (63) ausgebildet ist, der sich zwischen der Sägekette (10) und der oberen Umfangswand (61) erstreckt und der in Richtung senkrecht zur Mittelebene (39) mindestens teilweise von der Kettenraddeckelfläche (62) begrenzt ist.

13. Arbeitsgerät nach Anspruch 11 oder 12,
**dadurch gekennzeichnet, dass** der Abstand (f, f) der Außenseite der Kettenraddeckelfläche (62) zur Mittelebene (39) in einer Schnittebene, die die Drehachse des Antriebselements (17) enthält und senkrecht zur Längsmittelachse (9) der Führungsschiene (8) steht, kleiner als der Abstand (g) der Außenseite der Abstützfläche (59) zur Mittelebene (39) ist.

14. Arbeitsgerät nach Anspruch 13,
**dadurch gekennzeichnet, dass** der Abstand (g) der Außenseite der Abstützfläche (59) zur Mittelebene (39) in einer Schnittebene, die die Längsachse (64) eines Befestigungselements enthält und senkrecht zur Mittelebene (39) steht, mindestens das 1,3fache des Abstands (f) der Außenseite der Kettenraddeckelfläche (62) zur Mittelebene (39) ist.

15. Arbeitsgerät nach einem der Ansprüche 11 bis 14,
**dadurch gekennzeichnet, dass** der Kettenraddeckel (16) mindestens eine Befestigungsöffnung (70) für einen Krallenanschlag (49) aufweist, wobei die die Befestigungsöffnung (70) umgebende Auflagefläche (71) für den Krallenanschlag (49) zur Mittelebene (39) der Führungsschiene (8) einen Abstand (k) von höchstens der doppelten Kettenbreite (a), aufweist.

16. Arbeitsgerät nach einem der Ansprüche 11 bis 15,
**dadurch gekennzeichnet, dass** die Längsrippen (57, 58) in einem Bereich (72) des Kettenraddeckels (16), der das Antriebselement (17) abdeckt, miteinander über einen Verbindungsbereich (60) verbunden sind, wobei der Abstand (h) der Außenseite des Verbindungsbereichs (60) zur Mittelebene (39) in einer Schnittebene, die die Drehachse des Antriebselements (17) enthält und senkrecht zur Längsmittelachse (9) der Führungsschiene (8) steht, mindestens das 1,3fache des Abstands (f) der Außenseite der Kettenraddeckelfläche (62) zur Mittelebene (39) in dieser Schnittebene beträgt.

17. Arbeitsgerät nach einem der Ansprüche 10 bis 16,
**dadurch gekennzeichnet, dass** der Kettenraddeckel (16) an der dem Längsrand (52) zugewandten Längsseite (73) der unteren Längsrippe (58) eine Kante (74) aufweist, die sich aus der Abstützfläche (59) erhebt.

18. Arbeitsgerät nach Anspruch 17,
**dadurch gekennzeichnet, dass** die Kante (74) einen etwa keilförmigen Querschnitt aufweist, wobei die Außenseite (115) der Kante (74) einen Winkel (σ) von etwa 100° bis etwa 178° mit der Abstützfläche (59) einschließt.

19. Arbeitsgerät nach Anspruch 18,
**dadurch gekennzeichnet, dass** die senkrecht zur Abstützfläche (59) gemessene Höhe (r) der Kante (74) etwa 1 mm bis etwa 5 mm beträgt.

## Claims

1. Hand-guided working implement with a housing (2), to which a guide rail (8) having a longitudinal central axis (9) is fixed, with a drive motor (15), which drives a saw chain (10) located on the guide rail (8) to revolve in a running direction (40) via a drive element (17), wherein the guide rail (8) has an imaginary central plane (39), which extends perpendicular to the axis of rotation (24) of the drive element (17) and contains the longitudinal central axis (9) of the guide rail (8), wherein the saw chain (10) has a chain width (a) as measured perpendicularly to the central plane (39), wherein the guide rail (8) has a deflecting region (12) at its free end remote from the housing (2), wherein the saw chain (10) has a first strand (13) extending in the running direction (40) from the deflecting region (12) to the drive element (17) and a second strand (14) extending in the running direction (40) from the drive element (17) to the deflecting region (12), wherein the drive element (17) is located in a sprocket chamber (47) bounded by a sprocket cover (16), wherein the saw chain (10) enters the sprocket chamber (47) in an entry region (45), wherein the sprocket chamber (47) has an ejection opening (48) for chippings, wherein the sprocket cover (16) has a longitudinal edge (52) bounding the sprocket chamber (47) adjacent to the first strand (13) of the saw chain (10), wherein the longitudinal edge (52) has a distance (1) from the housing (2) as measured perpendicularly to the central plane (39) along at least 50% of its length from the entry region (45) to the ejection opening (48), the distance corresponding at least to the chain width (a),
**characterised in that** the longitudinal edge (52) of the sprocket cover (16) has at the ejection opening (48) a section (39), where the longitudinal edge (52) is inclined relative to the central plane (39) of the guide rail (8) and where the ejection opening (48) widens in the running direction (40) of the first strand (13) of the saw chain (10), wherein the maximum distance (b) of the longitudinal edge (52) from the central plane (39) is at least 110% of the minimum distance (c).

2. Working implement according to claim 1,
**characterised in that** the maximum distance (b) is at most 500% of the minimum distance (c).

3. Working implement according to claim 1 or 2,
**characterised in that** the minimum distance (c) of the longitudinal edge (52) from the central plane (39) is at most 1.5 times the chain width (a).

4. Working implement according to any of claims 1 to 3,
**characterised in that** a first region (53) of the longitudinal edge (52) extends parallel to the central plane (39), and **in that** the ejection opening (48) is bounded by a second region (54) of the longitudinal edge (52), which extends at least partially at an angle to the central plane (39).

5. Working implement according to any of claims 1 to 4,
**characterised in that** the length (d) of the ejection opening (48) as measured in the central plane (39) is at least 3 times the chain width (a).

6. Working implement according to any of claims 1 to 5,
**characterised in that** the longitudinal edge (52) extends in a curve at the ejection opening (48), wherein the longitudinal edge (52) has its maximum distance (b) from the central plane (39) at a distance (e) corresponding to at least half the chain width (a) from the wall (55) which bounds the ejection opening (48) on the side remote from the entry region (45).

7. Working implement according to any of claims 1 to 6,
**characterised in that** the ejection opening (48) is on the side remote from the entry region (45) bounded by a wall (55) of a guide part (51), which wall (55) encloses with the longitudinal central axis (9) of the guide rail (8) an angle (γ), which opens towards the ejection opening (48) and is at least 110°.

8. Working implement according to any of claims 1 to 7,
**characterised in that** the inner wall of the sprocket cover (16) encloses at the ejection opening (48) in a sectional plane perpendicular to the central plane (39) and to the longitudinal central axis (9) of the guide rail (8) with the central plane (39) an angle (α), which is approximately 2° to 45° and opens in the direction away from the sprocket chamber (47).

9. Working implement according to any of claims 1 to 8,
**characterised in that** the longitudinal edge (52) at the ejection opening (48) encloses in a top view on the plane of the guide rail (8) with the longitudinal central axis (9) of the guide rail (8) an angle (β), which opens against the running direction (40) of the first strand (13).

10. Working implement according to any of claims 1 to 9,
**characterised in that** the working implement has at least one fastening element for fixing the sprocket cover (16) on the housing (2) located on the outside of the sprocket cover (16), wherein the fastening element is located in a recess (56) of the sprocket cover (16) bounded by an upper longitudinal rib (57) and a lower longitudinal rib (58), the outsides of the longitudinal ribs (57, 58) forming a supporting surface (59) of the sprocket cover (16).

11. Working implement according to claim 10,
**characterised in that** the sprocket cover (16) has adjacent to the second strand (14) of the saw chain (10) an upper circumferential wall (61), which is adjoined by a sprocket cover surface (62), wherein the sprocket cover surface (62) has a distance (f, f) of less than twice the chain width (a) from the central plane (39).

12. Working implement according to claim 11,
**characterised in that** the sprocket chamber (14) is at the second strand (14) of the saw chain (10) designed as a channel (63), which extends between the saw chain (10) and the upper circumferential wall (61) and which is at least partially bounded by the sprocket cover surface (62) in the direction perpendicular to the central plane (39).

13. Working implement according to claim 11 or 12,
**characterised in that** the distance (f, f) of the outside of the sprocket cover surface (62) from the central plane (39) is in a sectional plane which contains the axis of rotation of the drive element (17) and is perpendicular to the longitudinal central axis (9) of the guide rail (8) less than the distance (g) of the outside of the supporting surface (59) from the central plane (39).

14. Working implement according to claim 13,
**characterised in that** the distance (g) of the outside of the supporting surface (59) from the central plane (39) is in a sectional plane which contains the longitudinal axis (64) of a fastening element and is perpendicular to the central plane (39) at least 1.3 times the distance (f) of the outside of the sprocket cover surface (62) from the central plane (39).

15. Working implement according to any of claims 11 to 14,
**characterised in that** the sprocket cover (16) has at least one fastening opening (70) for a claw stop (49), wherein the locating surface (71) for the claw stop (49), which surrounds the fastening opening (70), has a distance (k) of at most twice the chain width (a) from the central plane (39) of the guide rail (8).

16. Working implement according to any of claims 11 to 15,
**characterised in that** the longitudinal ribs (57, 58) of the sprocket cover (16), which covers the drive element (17), are connected to each other via a connecting region (60), wherein the distance (h) of the outside of the connecting region (60) from the central plane (39) is in a sectional plane which contains the axis of rotation of the drive element (17) and is perpendicular to the longitudinal central axis (9) of the guide rail (8) at least 1.3 times the distance (f) of the outside of the sprocket cover surface (62) from the central plane (39) in this sectional plane.

17. Working implement according to any of claims 10 to 16,
**characterised in that** the sprocket cover (16) has an edge (74) rising from the supporting surface (59) on that long side (72) of the lower longitudinal rib (58) which faces the longitudinal edge (52).

18. Working implement according to claim 17,
**characterised in that** the edge (74) has an approximately wedge-shaped cross-section, wherein the outside (115) of the edge (74) encloses with the supporting surface (59) an angle (σ) of approximately 100° to 178°.

19. Working implement according to claim 18,
**characterised in that** the height (r) of the edge (74) as measured perpendicularly to the supporting surface (59) is approximately 1 mm to 5 mm.

## Revendications

1. Appareil de travail à main avec un boîtier (2) auquel un rail de guidage (8) est fixé, lequel possède un axe médian longitudinal (9), avec un moteur d'entraînement (15) qui entraîne par le biais d'un élément d'entraînement (17) une chaîne de scie (10) disposée en rotation contre le rail de guidage (8) dans un sens de roulement (40), dans lequel le rail de guidage (8) possède un plan médian imaginaire (39) qui s'étend perpendiculairement à l'axe de rotation (24) de l'élément d'entraînement (17) et contient l'axe médian longitudinal (9) du rail de guidage (8), dans lequel la chaîne de scie (10) possède une largeur de chaîne (a) mesurée perpendiculairement au plan médian (39), dans lequel le rail de guidage (8) possède, à son extrémité libre éloignée du boîtier (2), une zone de déviation (12), dans lequel la chaîne de scie (10) possède un premier tronçon (13) qui s'étend dans le sens de roulement (40) de la zone de déviation (12) à l'élément d'entraînement (17) et un second tronçon (14) qui s'étend dans le sens de roulement (40) de l'élément d'entraînement (17) à la zone de déviation (12), dans lequel l'élément d'entraînement (17) est disposé dans un espace de roue de chaîne (47) délimité par un couvercle de roue de chaîne (16), dans lequel la chaîne de scie (10) entre parune zone d'entrée (45) dans l'espace de roue de chaîne (47), dans lequel l'espace de roue de chaîne (47) possède une ouverture d'éjection (48) pour des produits de coupe, dans lequel le couvercle de roue de chaîne (16) possède un bord longitudinal (52) qui délimite l'espace de roue de chaîne (47) de manière contiguë au premier tronçon (13) de la chaîne de scie (10), dans lequel le bord longitudinal (52) possède sur au moins 50 % de sa longueur de la zone d'entrée (45) à l'ouverture d'éjection (48) une distance (1) mesurée perpendiculairement au plan médian (39) par rapport au boîtier (2), dans lequel la distance correspond au moins à la largeur de chaîne (a),
**caractérisé en ce que** le bord longitudinal (52) du couvercle de roue de chaîne (16) possède à l'ouverture d'éjection (48) une section (93) dans laquelle le bord longitudinal (52) s'étend de manière inclinée par rapport au plan médian (39) du rail de guidage (8), et en laquelle l'ouverture d'éjection (48) s'élargit dans le sens de roulement (40) du premier tronçon (13) de la chaîne de scie (10), dans lequel la plus grande distance (b) du bord longitudinal (52) au plan médian (39) s'élève au moins à 110 % de la distance la plus petite (c).

2. Appareil de travail selon la revendication 1,
**caractérisé en ce que** la plus grande distance (b) s'élève au plus à 500 % de la plus petite distance (c).

3. Appareil de travail selon la revendication 1 ou 2,
**caractérisé en ce que** la plus petite distance (c) du bord longitudinal (52) au plan médian (39) s'élève au plus à 1,5 fois la largeur de chaîne (a).

4. Appareil de travail selon l'une des revendications 1 à 3,
**caractérisé en ce qu'**une première zone (53) du bord longitudinal (52) s'étend parallèlement au plan médian (39) et que l'ouverture d'éjection (48) est délimitée par une seconde zone (54), s'étendant au moins partiellement de manière inclinée au plan médian (39), du bord longitudinal (52).

5. Appareil de travail selon l'une des revendications 1 à 4,
**caractérisé en ce que** la longueur (d), mesurée dans le plan médian (39), de l'ouverture d'éjection (48) s'élève au moins à 3 fois la largeur de chaîne (a).

6. Appareil de travail selon l'une des revendications 1 à 5,
**caractérisé en ce que** le bord longitudinal (52) s'étend à l'ouverture d'éjection (48) dans un arc, dans lequel le bord longitudinal (52) présente sa plus grande distance (b) par rapport au plan médian (39) à une distance (e) par rapport à la paroi (55) délimitant l'ouverture d'éjection (48) sur le côté opposé à la zone d'entrée (45) qui correspond au moins à la moitié de la largeur de chaîne (a).

7. Appareil de travail selon l'une des revendications 1 à 6,
**caractérisé en ce que** l'ouverture d'éjection (48) est délimitée sur le côté opposé à la zone d'entrée (45) par une paroi (55) d'une partie de guidage (51) qui forme avec l'axe médian longitudinal (9) du rail de guidage (8) un angle (γ) ouvrant vers l'ouverture d'éjection (48) qui s'élève à au moins 110°.

8. Appareil de travail selon l'une des revendications 1 à 7,
**caractérisé en ce que** la paroi intérieure du couvercle de roue de chaîne (16) forme à l'ouverture d'éjection (48) dans un plan de coupe perpendiculaire au plan médian (39) et à l'axe médian longitudinal (9) du rail de guidage (8) avec le plan médian (39) un angle (α) qui s'élève à environ 2° à environ 45° et qui ouvre dans la direction opposée à l'espace de roue de chaîne (47).

9. Appareil de travail selon l'une des revendications 1 à 8,
**caractérisé en ce que** le bord longitudinal (52) forme à l'ouverture d'éjection (48) dans une vue en élévation du plan du rail de guidage (8) avec l'axe médian longitudinal (9) du rail de guidage (8) un angle (β) qui s'ouvre dans le sens inverse au sens de roulement (40) du premier tronçon (13).

10. Appareil de travail selon l'une des revendications 1 à 9,
**caractérisé en ce que** l'appareil de travail présente au moins un élément de fixation disposé sur le côté extérieur du couvercle de roue de chaîne (16) pour la fixation du couvercle de roue de chaîne (16) au boîtier (2) de l'appareil de travail, dans lequel l'élément de fixation est disposé dans une cavité (56) du couvercle de roue de chaîne (16) qui est délimitée par une nervure longitudinale supérieure (57) et une nervure longitudinale inférieure (58), dans lequel les côtés extérieurs des nervures longitudinales (57, 58) forment une surface d'appui (59) du couvercle de roue de chaîne (16).

11. Appareil de travail selon la revendication 10,
**caractérisé en ce que** le couvercle de roue de chaîne (16) possède de manière contiguë au second tronçon (14) de la chaîne de scie (10) une paroi périphérique supérieure (61) à laquelle une surface de couvercle de roue de chaîne (62) est contiguë, dans lequel la surface de couvercle de roue de chaîne (62) possède par rapport au plan médian (39) une distance (f, f') de moins du double de la largeur de chaîne (a).

12. Appareil de travail selon la revendication 11,
**caractérisé en ce que** l'espace de roue de chaîne (47) est réalisé au second tronçon (14) de la chaîne de scie (10) comme canal (63) qui s'étend entre la chaîne de scie (10) et la paroi périphérique supérieure (61) et qui est délimité dans la direction perpendiculaire au plan médian (39) au moins partiellement par la surface de couvercle de roue de chaîne (62).

13. Appareil de travail selon la revendication 11 ou 12,
**caractérisé en ce que** la distance (f, f') du côté extérieur de la surface de couvercle de roue de chaîne (62) au plan médian (39) dans un plan de coupe qui contient l'axe de rotation de l'élément d'entraînement (17) et se trouve perpendiculaire à l'axe médian longitudinal (9) du rail de guidage (8), est inférieure à la distance (g) du côté extérieur de la surface d'appui (59) au plan médian (39).

14. Appareil de travail selon la revendication 13,
**caractérisé en ce que** la distance (g) du côté extérieur de la surface d'appui (59) au plan médian (39) dans un plan de coupe qui contient l'axe longitudinal (64) d'un élément de fixation et se trouve perpendiculaire au plan médian (39), est au moins 1,3 fois la distance (f') du côté extérieur de la surface de couvercle de roue de chaîne (62) au plan médian (39).

15. Appareil de travail selon l'une des revendications 11 à 14,
**caractérisé en ce que** le couvercle de roue de chaîne (16) présente au moins une ouverture de fixation (70) pour une butée de griffe (49), dans lequel la surface d'appui (71) entourant l'ouverture de fixation (70) présente pour la butée de griffe (49) par rapport au plan médian (39) du rail de guidage (8) une distance (k) d'au plus la double largeur de chaîne (a).

16. Appareil de travail selon l'une des revendications 11 à 15,
**caractérisé en ce que** les nervures longitudinales (57, 58) sont raccordées dans une zone (72) du couvercle de roue de chaîne (16) qui recouvre l'élément d'entraînement (17), l'une à l'autre par le biais d'une zone de liaison (60), dans lequel la distance (h) du côté extérieur de la zone de liaison (60) au plan médian (39) dans un plan de coupe qui contient l'axe de rotation de l'élément d'entraînement (17) et est perpendiculaire à l'axe médian longitudinal (9) du rail de guidage (8), est au moins 1,3 fois la distance (f) du côté extérieur de la surface de couvercle de roue de chaîne (62) au plan médian (39) dans ce plan de coupe.

17. Appareil de travail selon l'une des revendications 10 à 16,
**caractérisé en ce que** le couvercle de roue de chaîne (16) présente sur le côté longitudinal (73) tourné vers le bord longitudinal (52) de la nervure longitudinale inférieure (58) une arête (74) qui s'élève de la surface d'appui (59).

18. Appareil de travail selon la revendication 17,
**caractérisé en ce que** l'arête (74) présente une section transversale approximativement cunéiforme, dans lequel le côté extérieur (115) de l'arête (74) forme un angle (σ) d'environ 100° à environ 178° avec la surface d'appui (59).

19. Appareil de travail selon la revendication 18,
**caractérisé en ce que** la hauteur (r) mesurée perpendiculairement à la surface d'appui (59) de l'arête (74) est comprise entre environ 1 mm et environ 5 mm.
